# EUROPÄISCHE PATENTSCHRIFT

(11) **EP 1 392 477 B1**
(45) Veröffentlichungstag und Bekanntmachung des Hinweises auf die Patenterteilung: **11.05.2005**
(21) Anmeldenummer: 02740287.4
(22) Anmeldetag: 24.04.2002
(51) Int. Cl.: B26B 13/24, H05B 3/00, G05D 23/24

(54) **STEUERGERÄT FÜR ZUMINDEST EIN BEHEIZBARES FRISEUR-SCHNEIDWERKZEUG UND VERFAHREN ZU DESSEN BETRIEB**
CONTROLLER FOR AT LEAST ONE HEATABLE HAIR CUTTING TOOL AND METHOD FOR THE OPERATION THEREOF
APPAREIL DE COMMANDE D'AU MOINS UN INSTRUMENT DE COUPE DE CHEVEUX CHAUFFANT ET SON MODE DE FONCTIONNEMENT

(30) Priorität: 02.05.2001 DE 10121427
(43) Veröffentlichungstag der Anmeldung: 03.03.2004
(73) Patentinhaber: "Jaguar" Stahlwarenfabrik GmbH & Co. KG, 42653 Solingen (DE)
(72) Erfinder: DREHER, Walter, 78194 Immendingen (DE)
(74) Vertreter: Stachow, Ernst-Walther, Prof. Dr.
(86) Internationale Anmeldenummer: PCT/DE2002/001491
(87) Internationale Veröffentlichungsnummer: WO 2002/087833

(56) Entgegenhaltungen:
- DE-U- 20 013 503
- US-A- 4 404 462
- US-A- 5 309 640
- US-A- 5 373 141
- US-A- 5 743 017
- US-A- 5 986 241
- US-A- 6 084 211

## Beschreibung

Die Erfindung betrifft ein Steuergerät für zumindest ein beheizbares Friseur-Schneidwerkzeug nach dem Oberbegriff des Anspruchs 1 sowie ein Verfahren zu dessen Betrieb.

Es ist bekannt, dass nach einem herkömmlichen Haarschnitt die Haarspitzen geöffnet sind, weshalb die multiaktive Kittsubstanz austrocknet und körpereigene Feuchtigkeits- und Pflegesubstanzen des Haares ausgeschieden werden können, wodurch das geschnittene Haar schädlichen Umwelteinflüssen ungeschützt ausgesetzt ist und daraufhin Glanz, Volumen und Sprungkraft verliert.

Aus dem Stand der Technik ist bekannt, zur Vermeidung dieses Nachteils beim Haareschneiden die Haarspitzen zu versiegeln. Dies wird dadurch erreicht, dass der Haarschnitt mit einer geheizten Schere durchgeführt wird, wodurch jedes geschnittene Haar an der Schnittfläche versiegelt und damit weitgehend in den Urzustand versetzt wird. Für dieses verfahren sind Vorrichtungen bekannt mit einem auf einer fahrbaren oder stationären Standablage stehenden Steuergerät und einem über ein langes Kabel an das Steuergerät angeschlossenes, beheizbares Friseur-Schneidwerkzeug, beispielsweise eine Haarschere, eine Modellierschere oder ein Messer. Da beim Haareschneiden ein häufiger Standwechsel durch den Friseur erforderlich ist, muss das Kabel entsprechend mitgeführt werden, was die Handhabung der Vorrichtung erschwert. Ferner birgt ein auf dem Boden liegendes Kabel eine Stolpergefahr, was unter Umständen eine Beschädigung der Vorrichtung oder gar eine Verletzung sowohl des Friseurs als auch des Kunden zur Folge haben kann.

Bei einem auf dem Markt befindlichen Friseur-Schneidwerkzeug ist die Schere über ein Kabel mit einer den Heizstrom einstellenden Leistungsschaltung verbunden, die in einem getrennten Gehäuse angeordnet ist und mit einem integrierten Klipp an der Brusttasche oder dem Gürtel des Friseurs befestigt werden kann. Die Leistungsschaltung selbst ist mit einem weiteren Kabel an einem Netzgerät zur Bereitstellung des Heizstroms angeschlossen, sodass die Verwendung einer derartigen Schere mit beheizbarer Klinge auch mit den obenstehend beschriebenen Nachteilen behaftet ist.

In der DE 200 06 776 ist ferner ein elektrisch beheizbares Schneidelement in Form einer Schere offenbart, bei welchem sowohl die Leistungsschaltung als auch die Energieversorgung in der Schere selbst integriert sind. Hierzu weist diese im Bereich eines Griffauges ein Gehäuse zur Aufnahme einer Batterie oder eines Akkus auf. Durch dieses Gehäuse erhöht sich die Baulänge der Schere um mindestens 50%. Da weiterhin das Gewicht der Batterien oder Akkus um ein Vielfaches höher als das reine Gewicht der Scheren liegt, ist die Verwendung einer derart ausgebildeten Schere sehr gewöhnungsbedürftig bzw. über einen längeren Zeitraum nicht praktikabel.

Aus der DE 200 13 503 U1 ist ein elektrisch beheizbares Schneidinstrument bekannt mit zwei Schenkeln, die über eine Drehverbindung gelenkig miteinander verbunden sind und jeweils einen Griffbereich und einen Schneidbereich sowie eine Stromversorgung aufweisen, wobei im Griffbereich eines Schenkels eine netzunabhängige Energiequelle wie ein Akku anschließbar ist. Der Akkumulator kann direkt am Schenkel angebracht sein oder auch als Taschenakku ausgebildet sein, den der Benutzer des Schneidinstruments in seiner Tasche trägt, wobei das das Schneidinstrument und der Akkumulator über ein Kabel verbunden sind. An dem Schenkel des Schneidinstruments befindet sich ferner eine Temperaturauswerteelektronik, welche den Heizstroms regelt.

Das amerikanische Patent US 5,309,640 offenbart ein Haarschneideinstrument wie eine Schere, mit dem beim Schneiden des Haares gleichzeitig die Haarenden kauterisiert werden können. Hierzu weist die Schere zumindest eine elektrisch beheizbare Klinge auf, wobei ein Heizwiderstand in einer Ausnehmung eines Klingenhalterabschnittes für die entsprechende Schneide eingesetzt ist. Ein Wärmesensor ist an wenigstens einer der Schneiden angebracht. Im Falle, dass beide Klingen der Schere elektrisch beheizt werden, sind die Heizwiderstände elektrisch parallel oder in Serie angeordnet. Ein Kabel stellt die Verbindung zu einem Stromversorgungsgerät bereit, das netzgebunden ist.

Der Erfindung liegt die Aufgabe zugrunde, das Arbeiten mit beheizbaren Friseur-Schneidwerkzeugen zu erleichtern.

Diese Aufgabe löst die Erfindung durch ein Steuergerät mit den Merkmalen des Anspruchs 1 bzw. mit einem Verfahren zum Betrieb eines derartigen Steuergeräts mit den Merkmalen des Anspruchs 14.

Danach umfasst das erfindungsgemäße Steuergerät für beheizbare Friseur-Schneidwerkzeuge zumindest ein beheizbares Friseur-Schneidwerkzeug ein Mittel zum Bereitstellen von elektrischer Energie, eine Steuereinrichtung, eine Speichereinrichtung, ein Mittel zur Eingabe von zumindest einem vorbestimmten Betriebsparameter, eine elektronische Leistungsschaltung zum Bereitstellen des Heizstroms, eine Schnittstelleneinrichtung, an die zumindest ein beheizbares Friseur-Schneidwerkzeug anschließbar ist und über welche Strom von der Leistungsschaltung führbar ist, sowie Mittel zum Erfassen von elektronischen Signalen, die einer Ist-Temperatur zumindest eines Friseur-Schneidwerkzeugs zuordenbar sind. Die Steuereinrichtung steuert die elektronische Leistungsschaltung im Ansprechen auf eine vorbestimmte Soll-Temperatur eines Friseur-Schneidwerkzeugs zum Bereitstel len des Heizstroms an. Um dem Friseur eine größere Bewegungsfreiheit bereitzustellen und einer Verletzungsgefahr bzw. einer Gefahr der Beschädigung der Vorrichtung vorzubeugen, ist vorgesehen, dass zumindest das Mittel zum Bereitstellen von elektrischer Energie, die Leistungsschaltungseinrichtung und die Schnittstelleneinrichtung in einem von dem beheizbaren Schneidwerkzeug getrennten, vom Benutzer zu tragenden Mobilteil integriert sind. Um das Arbeiten mit beheizbaren Friseur-Schneidwerkzeugen zu erleichtern, ist erfindungsgemäß vorgesehen, dass die Schnittstelleneinrichtung zum gleichzeitigen Anschließen von mehreren beheizbaren Friseur-Schneidwerkzeugen ausgebildet ist, wobei für jedes Friseur-Schneidwerkzeug eine Anschlusseinrichtung umfasst ist, über die Strom von der Leistüngsschaltungseinrichtung zum Heizen des jeweiligen Friseur-Schneidwerkzeugs führbar ist, und ferner mit einer Umschalteinrichtung der Heizstrom auf eine der Anschlusseinrichtungen schaltbar ist.

Der Erfindung liegt die Idee zugrunde, das Arbeiten mit beheizbaren Friseur-Schneidwerkzeugen dahingehend flexibler zu gestalten, dass gleichzeitig mit mehreren Friseur-Schneidwerkzeugen gearbeitet werden kann, ohne dass für jedes dieser Werkzeuge ein einzelnes Steuergerät notwendig ist.

Dies wird dadurch erreicht, dass das Steuergerät zum Anschließen von mehreren Friseur-Schneidwerkzeugen ausgebildet ist. Damit können beispielsweise alle die bei einem Haarschnitt verwendeten Friseur-Schneidwerkzeuge wie Haarschere, Modellierschere und ein Rasiermesser beheizbar ausgebildet sein, ohne dass der Friseur durch die zusätzlichen Werkzeuge in seiner Bewegungsfreiheit eingeschränkt wird. Da die Friseur-Schneidwerkzeuge an die Schnittstelleneinrichtung am Mobilteil, welches der Friseur beispielsweise am Gürtel oder an einem Halfter trägt, angeschlossen werden können, ist die Bewegungsfreiheit des Friseurs vergleichbar mit einer Situation, in der er mit herkömmlichen Scheren arbeitet. Der Halfter kann da bei einen Tragriemen oder eine Gürtelbefestigung aufweisen.

Durch das erfindungsgemäß ausgebildete Steuergerät erlangt der Friseur eine bisher nicht gekannte Bewegungsfreiheit beim Verwenden von mehreren beheizbaren Friseur-Schneidwerkzeugen, da dieser ohne das umständliche Trennen vom Stationärteil des Steuergeräts in beliebiger Weise von einem Arbeitsplatz zum nächsten wechseln kann. Auf diese Weise ist es z.B. möglich, dass der Friseur von einem Haarschneideplatz ohne Ablegen oder Wechseln der beheizbaren Friseur-Schneidwerkzeuge zu einem anderen Kunden wechseln kann. In jedem Fall kann sichergestellt werden, dass die in einem Friseursalon benötigten Friseur-Schneidwerkzeuge alle mit einem Steuergerät betrieben werden können, sodass der Friseur sich, wie beschrieben, frei im Salon bewegen kann und an jeden Ort die notwendigen Werkzeuge mitführen kann. Je nach Ausbildungsform der Erfindung kann auch das gesamte Steuergerät im Mobilteil integriert sein. In diesem Fall kann ein beheizbares Friseur-Schneidwerkzeug auch in kleinen Geschäftsräumen mit erheblichem Platzmangel oder auch besonders einfach bei Kundenbesuchen, beispielsweise in Altersheimen oder Krankenhäusern, verwendet werden, da alle elektrischen Einrichtungen in einem tragbaren Mobilteil umfasst sind. Generell kann das Gerät auch an Orten ohne Stromnetzanschluss verwendet werden, da es völlig netzunabhängig ist, wenn es vorher aufgeladen wurde.

Vorteilhafte Weiterbildungen der Erfindung sind in den Unteransprüchen angegeben.

Um die Größe bzw. das Gewicht des Mobilteils zu beschränken, kann vorgesehen sein, dass bestimmte Komponenten des Steuergeräts in einem Stationärteil angeordnet sind, das mit dem Mobilteil über eine Luftschnittstelle, insbesondere eine Funk-Luftschnittstelle, kommuniziert, und über die Luftschnittstelle vom Stationärteil zum Mobilteil Daten zum Ansteuern der Leistungsschaltung übermittelbar sind. Um eine Temperaturregelung zu ermöglichen, kann vorgesehen sein, dass über die Funk-Luftschnittstelle vom Mobilteil zum Stationärteil Daten betreffend die Temperatur des Friseur-Schneidwerkzeugs übermittelbar sind.

Im Stationärteil können alle Einrichtungen untergebracht sein, die nicht unbedingt im Mobilteil integriert sein müssen, welche jedoch die Verwendung des erfindungsgemäßen Steuergeräts erleichtern. Dies betrifft beispielsweise eine Eingabeeinrichtung, eine Anzeigeeinrichtung und eine PC-Schnittstelle, über welche z.B. werkzeugspezifische Angaben, Servicedaten, Kundendaten oder andere Betriebsparameter in ein EEPROM im Stationärteil übertragen werden können. Somit ist auch der Aufbau einer Kundenverwaltung möglich, bei welcher kundenspezifische Daten wie die Schneidtemperatur im Stationärteil abrufbar gespeichert sind.

Die Luftschnittstelle kann auch als Infrarotschnittstelle ausgebildet sein, die für eine Datenverbindung zwischen dem Mobilteil und dem Stationärteil eine Sichtverbindung benötigt. Eine Infrarotschnittstelle ist jedoch im Hinblick auf die Kosten und die Belastung der Benutzer durch elektromagnetische Strahlung günstiger im Vergleich zu einer Funk-Luftschnittstelle. In beiden Fällen kann das Stationärteil auch zum Ansteuern von mehreren Mobilteilen eingerichtet sein.

Um trotz des Anschlusses von mehreren Friseur-Schneidwerkzeugen an das erfindungsgemäße Steuergerät zu vermeiden, dass eine Vielzahl von Leitungen zwischen den Werkzeugen und dem Steuergerät notwendig sind, kann vorgesehen sein, dass über die jeweilige Anschlusseinrichtung eines Friseur-Schneidwerkzeugs neben dem Heizstrom auch Ist-Temperatur-bezogene Signale vom Schneidwerkzeug zum Steuergerät führbar sind. Erfindungsgemäß kann die Schnittstelleneinrichtung bzw. die Anschlusseinrichtung beispielsweise in Form einer Steckverbindung oder auch in Form einer Klemmung oder einer Lötung ausgebildet sein.

Um zu vermeiden, dass mehrere Leistungsschaltungen zum Betrieb von mehreren Friseur-Schneidwerkzeugen im Mobilteil integriert werden müssen, kann vorgesehen sein, dass der von der Leistungsschaltung bereitgestellte Heizstrom mittels einer Umschalteinrichtung auf eine der mehreren Anschlusseinrichtungen schaltbar ist. Dabei kann eine einzelne Anschlusseinrichtung als Verbinder so ausgebildet sein, dass über diesen gleichzeitig der Heizstrom und Ist-Temperatur-bezogene Signale führbar sind.

Das Tragen des Mobilteils durch den Friseur und die Handhabbarkeit des erfindungsgemäßen Steuergeräts wird dadurch erleichtert, dass das Mobilteil eine Befestigungseinrichtung zur Befestigung an einem zugeordneten Gürtel oder Halfter aufweist.

Um eine Heizphase oder das Erreichen der Soll-Temperatur für ein Friseur-Heizwerkzeug anzuzeigen, kann vorgesehen sein, dass das erfindungsgemäße Steuergerät ein optisches Anzeigemittel, beispielsweise rote LEDs zur Anzeige einer Heizphase und grüne LEDs für das Erreichen der Soll-Temperatur, aufweist. Es kann jedoch auch vorgesehen ein, dass die Soll- bzw. Ist-Temperatur auf einem Display angezeigt wird.

Sind mehrere beheizbare Friseur-Schneidwerkzeuge an dem erfindungsgemäßen Steuergerät angeschlossen, wird mittels des schon erwähnten Umschalters der jeweilige Heizstrom der Leistungsschaltung auf das gerade zu beheizende Friseur-Schneidwerkzeug geschaltet. Hierdurch können weitere Leistungsschaltungen und damit Gewicht eingespart werden. Besonders vorteilhaft ist es, wenn der Umschalter und die Leistungsschaltungseinrichtung in einer einzelnen Vorrichtung integriert sind, welche einen Eingang und mehrere Ausgänge sowie eine Sperrstellung aufweist. Dabei kann vorgesehen sein, dass bei Unterschreiten der Soll-Temperatur von zumindest einem Friseur-Schneidwerkzeug um einen vorgegebenen Wert das Friseur-Schneidwerkzeug mit einem Heizstrom versorgt wird, welches die größte Momentan-Abweichung von der jeweiligen Soll-Temperatur aufweist. Bei einem anderen optionalen Heizverfahren kann vorgesehen sein, dass das Heizen eines bestimmten Schneidwerkzeugs Vorrang vor dem Heizen der anderen Schneidwerkzeuge besitzt, sodass zuerst immer das erstgenannte Schneidwerkzeug auf die Soll-Temperatur aufgeheizt wird. Darüberhinaus kann auch vorgesehen.sein, dass auch, wenn sich dieses erste Schneidwerkzeug unterhalb der Soll-Temperatur befindet und demnach geheizt wird, eine Mindestheizzeit innerhalb einer vorgegebenen Zeitdauer für ein zweites Schneidwerkzeug dadurch sichergestellt ist, dass dieses unabhängig vom Zustand des ersten Schneidwerkzeugs zumindest während der Mindestheizzeit beheizt wird.

Um zu erreichen, dass sich das erfindungsgemäße Steuergerät automatisch auf das angeschlossene Friseur-Schneidwerkzeug einstellt bzw. automatisch unterschiedliche Kabellängen zwischen dem Steuergerät und dem Schneidwerkzeug berücksichtigt, kann vorgesehen sein, dass Mittel zur Erfassung des über die Schnittstelle geführten Heizstroms und/oder der Spannung an der Schnittstelle umfasst sind, wobei durch die Bestimmung des Heizstroms und der Spannung der Widerstand des an die Schnittstelle angeschlossenen Schneidwerkzeugs einschließlich des Widerstands des verwendeten Kabels ermittelt werden kann, wodurch bei entsprechender Widerstandsabstufung der verschiedenen Friseur-Schneidwerkzeuge und der verwendbaren Kabel eine Differenzierung nach dem angeschlossenen Schneidwerkzeug und dem verwendeten Kabel durchgeführt werden kann. Auf diese Weise kann einerseits ein bestimmtes Friseur-Schneidwerkzeug mit dessen spezifischen Betriebsparametern geheizt werden und weiterhin das angeschlossene Kabel berücksichtigt werden, sodass jedes Schneidwerkzeug unabhängig vom Kabel aufgeheizt werden kann. Ferner ist es auch möglich, den Widerstand des angeschlossenen Schneidwerkzeugs einschließlich des Kabels zwischen dem Schneidwerkzeug durch eine entsprechende Widerstandserfassungseinrichtung direkt zu messen und wie beschrieben die spezifischen Heizparameter eines bestimmten Friseur-Schneidwerkzeugs einzustellen.

Um andererseits einen Temperatursensor zur Erfassung der Temperatur des Schneidwerkzeugs einzusparen, kann vorgesehen sein, dass die Temperatur des Schneidwerkzeugs durch Messen des Heizwiderstands ermittelt wird. Hierzu wird das Schneidwerkzeug vor dem Betrieb kalibriert, indem der Heizwiderstand in Abhängigkeit der Temperatur des Schneidwerkzeugs erfasst und abgespeichert wird. Im Betrieb kann dann durch Messen des Widerstands auf die aktuelle Temperatur rückgeschlossen werden.

Weiterhin kann durch das Messen des Heizstroms auch ein Kabelbruch während des Betriebs erkannt und angezeigt werden.

Es kann jedoch auch vorgesehen sein, dass die angeschlossenen Friseur-Schneidwerkzeuge hintereinander bei Bedarf mit einem zugeordneten Heizstrom versorgt werden, wobei Friseur-Schneidwerkzeuge, welche innerhalb vorgegebenen Grenzen ihre zugeordneten Soll-Temperatur erreicht haben, übersprungen werden.

Zur Verlängerung der Lebensdauer der Akkumulatoreinrichtung kann vorgesehen sein, dass bei Unterschreiten der Akku-Spannung von einem vorgegebenen ersten Wert ein Signalton abgegeben wird, bei Unterschreiten der Akku-Spannung von einem vorgegebenen zweiten Wert das Steuergerät Software-abgeschaltet und bei Unterschreiten der Akku-Spannung von einem vorgegebenen dritten Wert das Steuergerät Hardware-abgeschaltet wird.

Die erreichbaren Betriebszeiten mit einer Akkumulatoreinrichtung, die beispielsweise aus 5 AAA-Akkus mit einer Spannung von 1,2 Volt und einer Kapazität von 4000 mAh bestehen kann, beträgt bei einem maximalen Heizstrom von 3 Ampere in der Praxis etwa 1 bis 2 Stunden, sodass die Erfindung ohne Einschränkung alltagstauglich ist.

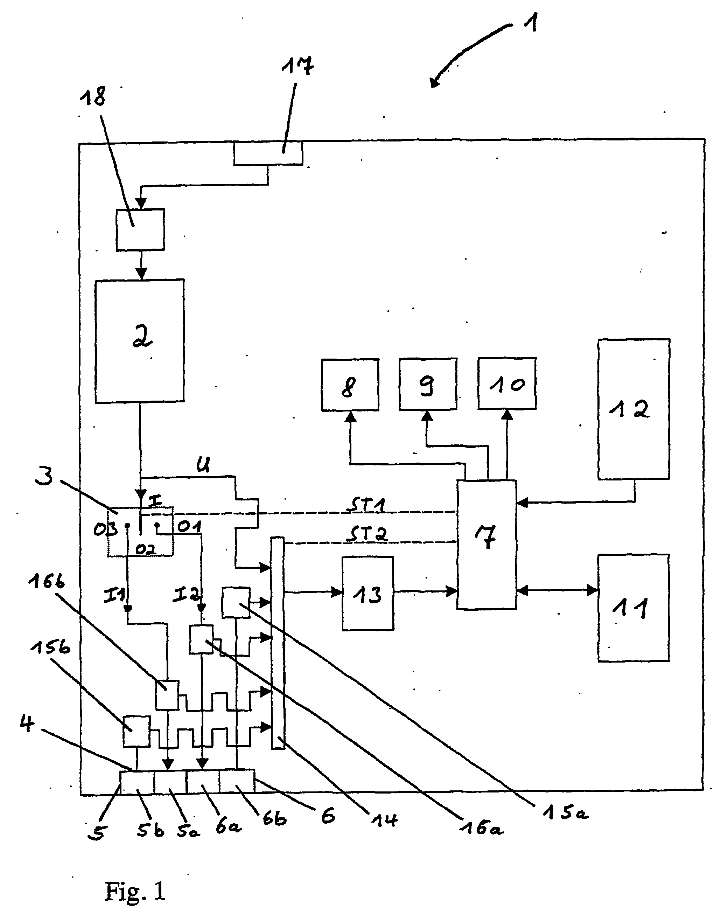

Die Erfindung wird im Folgenden durch das Beschreiben einiger Ausführungsformen unter Bezugnahme auf die beiliegenden Zeichnungen erläutert, wobei
- Fig. 1: in einer Prinzipskizze das erfindungsgemäße Steuergerät zeigt.

In der in Fig. 1 dargestellten Ausführungsform des erfindungsgemäßen Steuergeräts 1 sind alle elektrischen Einrichtungen zum Betrieb von elektrisch beheizbaren Friseurscheren und Messern in einem tragbaren Gehäuse integriert. Das Steuergerät umfasst einen Mikroprozessor 7, der mit einer Eingabeeinrichtung 12, einer Speichereinrichtung 11, sowie einem akustischen Warngeber 8, einer LED-Einrichtung 9 und einer LCD-Anzeigeeinrichtung 10 verbunden ist. Der Mikroprozessor 7 steuert eine Leistungsschaltungseinrichtung 3, mit welcher der Ausgang eines Akkumulators 2 auf die Heizstromanschlüsse 5a bzw. 6a geschaltet werden können. Diese Heizstromanschlüsse sind Teil der Schnittstelleneinrichtung 4, die in der vorliegenden Ausführungsform zwei Anschlusseinrichtungen 5,6 aufweist, an die jeweils ein Friseur-Schneidwerkzeug anschließbar ist. Hierzu umfassen die Anschlusseinrichtungen 5,6 jeweils einen Heizstromanschluss 5a bzw. 6a und einen Temperatursensoranschluss 5b bzw. 6b. Die Heizströme I1 bzw. I2 werden jeweils in einer Strommesseinrichtung erfasst, welche eine den gemessenen Heizstrom proportionale Spannung abgibt, die über einen Multiplexer 14 auf einen A/D-Wandler 13 gegeben wird, der einen entsprechenden digitalen Wert an den Mikroprozessor 7 weitergibt. An einem der Multiplexer-Eingänge liegt weiterhin die Akkumulatorspannung U direkt sowie eine von den Widerstandsmesseinrichtungen 15a,b abgegebene Spannung, die vom jeweiligen Ausgangswiderstand der Temperatursensoranschlüsse 5b,6b abhängt. Die Leistungsschaltungseinrichtung 3 wird über eine erste Steuerleitung ST1 und der Multiplexer durch eine zweite Steuerleitung ST2 von dem Mikroprozessor 7 gesteuert. Zur Klarheit der Darstellung ist die Spannungsversorgung der einzelnen elektrischen Komponenten über die Akkumulatorspannung nicht dargestellt.

Die Funktionsweise des erfindungsgemäßen Steuergeräts 1 wird im Folgenden erläutert. Dabei sei an die Anschlusseinrichtung 5 eine Haarschere und an die Anschlusseinrichtung 6 eine Modellierschere angeschlossen.

Nach dem Einschalten des Steuergeräts läuft der Mikroprozessor 7 in einen Initialisierungsmodus, in welchem über die Steuerleitung ST1 die Leistungsschaltungseinrichtung 3 vom Mikroprozessor 7 so angesteuert wird, dass diese die Akkumulatorspannung U zuerst auf den Ausgang O1 legt. Der Prozessor steuert über die Steuerleitung ST2 den Multiplexer 14 zur Weitergabe der Akkumulatorspannung an den Analog/Digital-Wandler 13 an, welcher die Akkumulatorspannung als digitalen Wert an den Mikroprozessor 7 weitergibt. Danach wird der Multiplexer 14 zum Anlegen des Spannungssignals von der Strommesseinrichtung 16a an den A/D-Wandler 13 angesteuert, welcher einen zugeordneten digitalen Wert an den Mikroprozessor 7 weitergibt. Fließt ein Heizstrom I2 ≠ 0, so erkennt der Mikroprozessor, dass ein Verbraucher an der Anschlusseinrichtung 6 angeschlossen ist. Danach wird der Schalter der Leistungsschaltungseinrichtung wieder in seine Sperrstellung O2 gestellt, damit nicht unbeabsichtigt das an der Anschlusseinrichtung 6 angeschlossene Friseur-Schneidwerkzeug beheizt wird. Mittels der gemessenen Akkumulatorspannung U und dem Heizstrom I2 berechnet der Prozessor 7 den Ausgangswiderstand des Heizstromanschlusses 6a, der dem Heizwiderstand des an die Anschlusseinrichtung 6 angeschlossenen Schneidwerkzeugs einschließlich dem Widerstand des verwendeten Kabels zwischen der Anschlusseinrichtung 6 und dem Schneidwerkzeug entspricht. Der Mikroprozessor vergleicht den ermittelten Wert mit Widerstandswerten, die in der Speichereinrichtung 11 abgelegt sind. In der beschriebenen Ausführungsform beträgt der Heizwiderstand der Haarschere etwa 2 Ohm, der Heizwiderstand des Messers etwa 2,5 Ohm und der Heizwiderstand der Modellierschere etwa 1,5 Ohm. Zum Verbinden des erfindungsgemäßen Steuergeräts mit dem beheizbaren Friseur-Schneidwerkzeug stehen Kabel mit zwei Kabellängen mit einem Widerstand von 150 mOhm und 300 mOhm zur Verfügung. Alle genannten Werte sind in der Speichereinrichtung 11 abgelegt. Durch einen Vergleich des ermittelten Widerstandswertes mit abgespeicherten Widerstandswerten erkennt der Mikroprozessor eindeutig, welches Friseur-Schneidwerkzeug und welches Kabel mit der Anschlusseinrichtung 6 verbunden ist, und lädt oder berechnet die sich daraus ergebenden Betriebsparameter und legt diese in einen prozessorinternen Speicher ab. Diese Betriebsparameter können beispielsweise ein Taktverhältnis für eine Einschaltdauer und eine Pausendauer für einen Heizvorgang umfassen. Durch die Vorgabe des Taktverhältnisses kann die Belastung des Akkumulators beschränkt und an den Ausgangswiderstand der Anschlusseinrichtung angepasst werden. Die an die Anschlusseinrichtung 6 angeschlossene Haarschere sowie das ermittelte Kabel wird am LCD-Bildschirm 9 des Steuergeräts 1 angezeigt.

Danach wird die gleiche Prozedur für die Anschlusseinrichtung 5 mit der damit verbundenen Modellierschere durchgeführt und die ermittelte Modellierschere einschließlich dem Kabel am LCD-Bildschirm auch angezeigt und das Beenden des Initialisierungsvorganges über einen Piezosignalgeber 8 angezeigt. Wird an keiner der Anschlusseinrichtungen ein Schneidwerkzeug erkannt, wird eine besondere Signaltonfolge über den Piezosignalgeber ausgegeben.

Der Anwender hat nun die Möglichkeit, jeweils für beide Scheren getrennt an der Eingabeeinrichtung 12 eine Soll-Temperatur einzugeben und den Heizvorgang zu starten. Der Heizbetrieb für beide Heizstromanschlüsse 5a,6a wird jeweils durch eine rote LED9 angezeigt. Während der Heizphase wird kontinuierlich ein von der jeweiligen Temperatur abhängiges Signal über die Steuerleitung ST2 vom Prozessor 7 angefordert. Dabei weist jede der Schere einen in der Nähe der Klingen angeordneten Widerstand auf, dessen Widerstandswert von der Temperatur der Klinge abhängig ist. Dieser auch als Heißleiter bezeichnete Widerstand ist an den Temperatursensoranschluss 5b bzw. 6b des Steuergeräts 1 angeschlossen und wird mittels der Widerstandsmesseinrichtung 15a bzw. 15b erfasst, die eine vom gemessenen Widerstand proportional abhängige Spannung über den Multiplexer 14 an den A/D-Wandler 13 abgibt. Mit der auch in der Speichereinrichtung 11 abgelegten Widerstandscharakteristik der verwendeten Heißleiter berechnet der Mikroprozessor 7 die Temperaturabweichung und steuert danach den Schalter in der Leistungsschaltungseinrichtung 3 über die Steuerleitung ST1 an. Die Temperatur wird auf die beschriebene Weise durch den Ablauf eines Programms im Prozessor 7 realisiert, wobei das Programm eine Software-Abbildung eines Regel-Lineargliedes, eines Regel-Differentialgliedes und eines Regel-Integralgliedes aufweist. Damit wird sichergestellt, dass die Ist-Temperatur der jeweiligen Schere schnellstmöglich auf die eingestellte Soll-Temperatur geregelt wird. Nach dem Erreichen der Soll-Temperatur wird eine der jeweiligen Anschlusseinrichtung zugeordnete grüne LED 9 angesteuert.

Wie obenstehend erläutert, wird zu einem vorgegebenen Zeitpunkt jeweils nur einer der beiden Heizwiderstände mit dem zugeordneten Heizstrom versorgt, wobei der mittlere Heizstrom in Abhängigkeit des angeschlossenen Friseur-Schneidwerkzeugs und des Kabels durch Einstellen adäquater Pausen- und Heizintervalle festgelegt wird. Beispielsweise wird die Haar-Schere mit einem Widerstand von 2 Ohm und dem kürzesten Kabel mit einem Widerstand von 300 mOhm bei vollem Akku mit einem Heizintervall und einem Pausenintervall von jeweils 200 msec. betrieben, was einem mittleren Heizstrom von etwa 1,5 A entspricht.

Je nach Ausführungsform der Erfindung können die Heizstromanschlüsse 5a,6a in vorgegebener Weise nacheinander bis zum Erreichen der jeweiligen Soll-Temperatur mit Heizstrom versorgt werden. Beispielsweise wird der Anschluss 5a solange mit dem spezifischen Heizstrom unter Berücksichtigung der vorgegebenen Heiz- und Pausenintervalle versorgt, bis die vorgegebene Soll-Temperatur erreicht ist und danach wird der Heizstromanschluss 6a mit seinem spezifischen Heizstrom versorgt. Nach Erreichen der Soll-Temperatur, welche der Anschlusseinrichtung 6 zugeordnet ist, wird wiederum auf den Anschluss 5 zurückgeschaltet.

In einer anderen Ausführungsform der Erfindung wird jeweils das Friseur-Schneidwerkzeug mit dem zugeordneten Heizstrom versorgt, welches die größte Unterschreitung der Soll-Temperatur aufweist.

In der in Fig. 1 gezeigten Ausführungsform der Erfindung ist der Akkumulator 2 an eine Ladeschaltung 18 angeschlossen, die mittels eines Spannungsanschlusses 17 mit einer externen Spannungsquelle verbunden werden kann. In einer weiteren Ausführungsform der Erfindung weist das Steuergerät 1 einen Akkumulatorhalter auf, aus dem ein entleerter Akkumulator entnommen und in den ein aufgeladener Akkumulator eingesetzt werden kann. Der Spannungsanschluss 17 zum Anschließen an eine Netzspannung ist so geschaltet, dass auch bei entnommenem Akkumulator die elektrischen Komponenten mit Spannung versorgt sind und ein Heizstrom bereitgestellt werden kann. Zum Schutz des Akkumulators wird bei Unterschreiten der Spannung von 5,2 V ein akustisches Warnsignal abgegeben und bei Unterschreiten der Spannung von 5 V die Vorrichtung durch Ansteuern der Leistungsschaltungseinrichtung 3 der Heizstrom Software-gesteuert abgeschaltet und bei Unterschreiten der Akkumulatorspannung von 4,3 V das gesamte Steuergerät mittels einer nicht dargestellten Einrichtung Hardware-abgeschaltet.

In einer weiteren Ausführungsform der Erfindung ist nur der Akkumulator, die Leistungsschaltungseinrichtung und die Schnittstelleneinrichtung in einem von dem beheizbaren Schneidwerkzeug getrennten, tragbaren Mobilteil integriert und der Mikroprozessor 7 mit der Eingabeeinrichtung und der Speichereinrichtung sowie den Anzeigeeinrichtungen in einem stationären Gehäuse umfasst, wobei das Stationärteil mit dem Mobilteil über eine Funk-Luftschnittstelle kommuniziert. Wie in der obenstehend beschriebenen Ausführungsform weist das Mobilteil eine Befestigungseinrichtung zur Befestigung an einem Gürtel des Friseurs auf und die beheizbare Schere ist mittels eines Kabels an dem Mobilteil angeschlossen. Über die Luftschnittstelle werden Steuerimpulse zum Ansteuern der Leistungsschaltungseinrichtung und des Multiplexers zum Mobilteil übertragen und vom Mobilteil werden die digitalisierten Werte des A/D-Wandlers an die Steuereinrichtung übermittelt.

### Bezugszeichenliste

- 1: Steuergerät
- 2: Akkumulator
- 3: Leistungsschaltungseinrichtung/Umschalteinrichtung
- 4: Schnittstelleneinrichtung
- 5,6: Anschlusseinrichtung
- 5a,6a: Heizstromanschluss
- 5b,6b: Temperatursensoranschluss
- 7: Steuereinrichtung/Mikroprozessor
- I: Eingang der Leistungsschalteinrichtung
- O1,O3: Ausgänge der Leistungsschalteinrichtung
- O2: Sperrstellung der Leistungsschalteinrichtung
- 8,9,10: Anzeigevorrichtungen/Anzeigemittel
- 11: Speichereinrichtung
- 12: Eingabeeinrichtung
- 13: A/D-Wandler
- 14: Multiplexer
- 15a,b: Widerstandsmesseinrichtung
- 16a,b: Strommesseinrichtung
- 17: Spannungsanschluss
- 18: Ladeschaltung
- I1,I2: Heizstrom
- U: Akkumulatorspannung
- ST1: Steuersignal zur Leistungschaltungseinrichtung
- ST2: Steuersignal zum Multiplexer

## Patentansprüche

1. Steuergerät für beheizbare Friseur-Schneidwerkzeuge, umfassend:
- Mittel zum Bereitstellen von elektrischer Energie;
- eine Steuereinrichtung;
- Mittel zur Eingabe von zumindest einem vorbestimmten Betriebsparameter, insbesondere eine Soll-Temperatur. des Friseur-Schneidwerkzeugs;
- eine Leistungsschaltungseinrichtung zum Bereitstellen des Heizstroms;
- eine Schnittstelleneinrichtung, an die das zumindest eine beheizbare Friseur-Schneidwerkzeug anschließbar ist und über welche elektrische Energie von der Leistungsschaltung zum Heizen des zumindest einen Friseur-Schneidwerkzeugs führbar ist, sowie
- Mittel zum Erfassen von elektrischen Signalen, welche einer Ist-Temperatur des zumindest einen Friseur-Schneidwerkzeugs zuordenbar sind, wobei die Steuereinrichtung die Leistungsschaltungseinrichtung zum Bereitstellen des Heizstroms im Ansprechen auf die vorbestimmte Soll-Temperatur ansteuert, wobei das Mittel zum Bereitstellen von elektrischer Energie und die Schnittstelleneinrichtung (4) in einem von dem beheizbaren Schneidwerkzeug getrennten, vom Benutzer zu tragenden Mobilteil integriert sind, **dadurch gekennzeichnet, dass** die Leistungsschaltungseinrichtung (3) im Mobilteil integriert ist und die Schnittstelleneinrichtung (4) zum gleichzeitigen Anschließen von mehreren beheizbaren Friseur-Schneidwerkzeugen ausgebildet ist, wobei für jedes Friseur-Schneidwerkzeug eine Anschlusseinrichtung (5, 6) umfasst ist, über die Strom von der Leistungsschaltungseinrichtung (4) zum Heizen des jeweiligen Friseur-Schneidwerkzeugs führbar ist, und ferner mit einer Umschalteinrichtung der Heizstrom auf eine der Anschlusseinrichtungen (5,6) schaltbar ist.

2. Steuergerät nach Anspruch 1, **dadurch gekennzeichnet, dass** das Mittel zum Bereitstellen von elektrischer Energie als Akkumulator ausgebildet ist und die Steuereinrichtung (7) den Heizstrom für das zugeordnete Friseur-Schneidwerkzeug zum Einstellen einer dem Friseur-Schneidwerkzeug zugeordnete Soll-Temperatur im Ansprechen auf die Ist-Temperatur regelt.

3. Steuergerät nach Anspruch 1 oder 2, **dadurch ge-kennzeichnet, dass** das gesamte Steuergerät (1) als vom Benutzer zu tragendes Mobilteil ausgebildet ist.

4. Steuergerät nach Anspruch 1 oder 2, **gekennzeichnet durch** ein Stationärteil, welches mit dem Mobilteil über eine Luftschnittstelle, insbesondere eine Funk-Luftschnittstelle kommuniziert, wobei über die Funk-Luftschnittstelle vom Stationärteil zum Mobilteil Daten zum Ansteuern der Leistungsschaltung übermittelbar sind.

5. Steuergerät nach Anspruch 4, **dadurch gekennzeichnet, dass** über die Funk-Luftschnittstelle vom Mobilteil zum Stationärteil Daten betreffend die Temperatur eines Friseur-Schneidwerkzeugs übermittelbar sind.

6. Steuergerät nach einem der Ansprüche 1 bis 5, **dadurch gekennzeichnet, dass** über die jeweilige Anschlusseinrichtung (5,6) Ist-Temperatur-bezogene Signale vom jeweiligen Friseur-Schneidwerkzeug führbar sind.

7. Steuergerät nach einem der Ansprüche 1 bis 6, **dadurch gekennzeichnet, dass** eine Anschlusseinrichtung (5,6) einen einzelnen Verbinder, ins besondere mit einer einzelnen elektrischen Leitung umfasst, über den der Heizstrom als auch Ist-Temperatur-bezogene Signale führbar sind.

8. Steuergerät nach einem der Ansprüche 1 bis 7, **dadurch gekennzeichnet, dass** das Mobil teil eine Befestigungseinrichtung zur Befestigung an einem Gürtel oder einem Halfter aufweist.

9. Steuergerät nach einem der Ansprüche 1 bis 8, **gekennzeichnet durch** ein Anzeigemittel, mit welchem für das jeweilige Friseur-Schneidwerkzeug eine Heizphase und/oder das Erreichen der Soll-Temperatur anzeigbar ist.

10. Steuergerät nach einem der Ansprüche 1 bis 9, **gekennzeichnet durch** Mittel zur Erfassung des über die Schnittstelle geführten Heizstroms und/oder der Spannung an der Schnittstelle.

11. Steuergerät nach einem der Ansprüche 1 bis 10, **gekennzeichnet durch** Mittel zur Erfassung des Widerstands des an der Schnittstelle angeschlossenen Schneidwerkzeugs, wobei die Art des angeschlossenen Scheidwerkzeugs in Abhängigkeit des erfassten Widerstandswertes ermittelbar ist.

12. Steuergerät nach einem der Ansprüche 1 bis 11, **gekennzeichnet durch** Mittel zur Erfassung der über die Schnittstelle geführten elektrischen Leistung.

13. Verfahren zum Betrieb eines Steuergeräts für beheizbare Friseur-Schneidwerkzeuge mit einer Schnittstelleneinrichtung, an die gleichzeitig mehrere beheizbare Friseur-Schneidwerkzeuge anschließbar sind und über welche elektrische Energie zum Heizen des Friseur-Schneidwerkzeugs führbar ist, insbesondere zum Betrieb eines Steuergeräts nach einem der Ansprüche 1 bis 12, wobei der über die Schnittstelleneinrichtung (4) geführte Strom und/oder die Spannung erfasst wird, und mehrere beheizbare Friseur-Schneidwerkzeuge von einer einzelnen Leistungsschaltung mit Heizstrom versorgt werden, und zu einem beliebigen Zeitpunkt entweder nur eines oder keines der Friseur-Schneidwerkzeuge mit einem, dem jeweiligen Schneidwerkzeug zugeordneten Heizstrom versorgt wird.

14. Verfahren nach Anspruch 13, **dadurch gekennzeichnet, dass** ein Ausgangswiderstand der Schnittstelle ermittelt wird.

15. Verfahren nach Anspruch 14, **dadurch gekennzeichnet, dass** im Ansprechen auf einen Vergleich des ermittelten Widerstandswertes mit abgespeicherten Widerstandswerten, vorbestimmte Betriebsparameter eingestellt werden, die einem vorgegebenen Schneidwerkzeug zugeordnet sind.

16. Verfahren nach Anspruch 15, **dadurch gekennzeichnet, dass** der Widerstand des an die Schnittstelle angeschlossenen Kabels ermittelt wird und die vorbestimmten Betriebsparameter.an den Kabelwiderstand zur Berücksichtigung der im Kabel abgegebenen elektrischen Leistung angepasst werden.

17. Verfahren nach einem der Ansprüche 13 bis 16, **dadurch gekennzeichnet, dass** den Friseur-Schneidwerkzeugen jeweils eine Soll-Temperatur zugeordnet wird und die Ist-Temperaturen der angeschlossenen Friseur-Schneidwerkzeuge ermittelt werden und bei Unterschreiten der Soll-Temperatur von zumindest einem Friseur-Schneidwerkzeug um einen vorgegebenen Wert das Friseur-Schneidwerkzeug mit einem Heizstrom versorgt wird, welches die größte Momentanabweichung von der jeweiligen Soll-Temperatur aufweist.

18. Verfahren nach einem der Ansprüche 13 bis 17, **dadurch gekennzeichnet, dass** bei Unterschreiten der Akkumulatorspannung einer vorgegebenen Minimalspannung um einen vorgegebene ersten Wert ein akustisches und/oder ein optisches Signal abgegeben wird, bei Unterschreiten der Akkumulatorspannung um einen vorgegebenen zweiten Wert das Steuergerät (1) Software abgeschaltet und bei Unterschreiten der Akkumulatorspannung um einen vorgegebene dritten Wert das Steuergerät (1) Hardewareabgeschaltet wird.

## Claims

1. Control device for heatable hairdresser cutting tools, comprising:
- means for providing electrical energy;
- a controller;
- means for entering at least one predefined operating parameter, particularly a target temperature of the hairdresser cutting tool;
- a power circuit device for providing the heating current;
- an interface device to which the at least one heatable hairdresser cutting tool can be connected and via which electrical energy can be passed from the power circuit for heating the at least one hairdresser cutting tool, and
- means for detecting electrical signals that can be assigned to an actual temperature of the at least one hairdresser cutting tool, where the controller activates the power circuit device to provide the heating current in response to the predefined target temperature, where the means for providing electrical energy and the interface device (4) are integrated in a mobile unit, separate from the heatable cutting tool, to be carried by the user, **characterised in that** the power circuit device (3) is integrated in the mobile unit and the interface device (4) is designed for the simultaneous connection of several heatable hairdresser cutting tools, where a connecting device (5, 6) is provided for each hairdresser cutting tool, via which current can be passed from the power circuit device (3) for heating the respective hairdresser cutting tool, and the heating current can further be switched to one of the connecting devices (5, 6) by means of a switching device.

2. Control device according to Claim 1, **characterised in that** the means for providing electrical energy is designed as a storage battery and the controller (7) regulates the heating current for the associated hairdresser cutting tool to set a target temperature assigned to the hairdresser cutting tool in response to the actual temperature.

3. Control device according to Claim 1 or 2, **characterised in that** the entire control device (1) is designed as a mobile unit to be carried by the user.

4. Control device according to Claim 1 or 2, **characterised by** a stationary unit which communicates with the mobile unit via an air interface, particularly a radio interface, where data for controlling the power circuit can be transmitted from the stationary unit to the mobile unit via the radio interface.

5. Control device according to Claim 4, **characterised in that** data concerning the temperature of a hairdresser cutting tool can be transmitted from the mobile unit to the stationary unit via the radio interface.

6. Control device according to one of Claims 1 to 5, **characterised in that** signals relating to the actual temperature can be passed from the respective hairdresser cutting tool via the respective connecting device (5, 6).

7. Control device according to one of Claims 1 to 6, **characterised in that** a connecting device (5, 6) comprises a single connector, particularly with a single electrical lead, via which both heating current and signals relating to the actual temperature can be passed.

8. Control device according to one of Claims 1 to 7, **characterised in that** the mobile unit displays a fastening device for fastening to a belt or a holster.

9. Control device according to one of Claims 1 to 8, **characterised by** an indicator, with which a heating phase and/or the reaching of the target temperature can be indicated for the respective hairdresser cutting tool.

10. Control device according to one of Claims 1 to 9, **characterised by** means for detecting the heating current passed via the interface and/or the voltage at the interface.

11. Control device according to one of Claims 1 to 10, **characterised by** means for detecting the resistance of the cutting tool connected to the interface, where the type of cutting tool connected can be determined as a function of the resistance value detected.

12. Control device according to one of Claims 1 to 11, **characterised by** means for detecting the electrical power passed via the interface.

13. Method for operating a control device for heatable hairdresser cutting tools with an interface device to which several heatable hairdresser cutting tools can be connected simultaneously and via which electrical energy for heating the hairdresser cutting tool can be passed, particularly for operating a control device according to one of Claims 1 to 12, where the current passed via the interface device (4) and/or the voltage is detected, and several heatable hairdresser cutting tools are supplied with heating current by a single power circuit, and either only one or none of the hairdresser cutting tools is supplied with a heating current assigned to the respective cutting tool at any point in time.

14. Method according to Claim 13, **characterised in that** an output resistance of the interface is determined.

15. Method according to Claim 14, **characterised in that**, in response to a comparison of the determined resistance value with stored resistance values, predefined operating parameters are set, which are assigned to a predefined cutting tool.

16. Method according to Claim 15, **characterised in that** the resistance of the cable connected to the interface is determined and the predefined operating parameters are adapted to the cable resistance in order to take into account the electrical power dissipated in the cable.

17. Method according to one of Claims 13 to 16, **characterised in that** the hairdresser cutting tools are each assigned a target temperature, the actual temperatures of the connected hairdresser cutting tools are determined and, if the temperature of at least one hairdresser cutting tool drops below the target temperature by a predefined value, heating current is supplied to the hairdresser cutting tool that displays the greatest instantaneous deviation from the respective target temperature.

18. Method according to one of Claims 13 to 17, **characterised in that** an acoustic and/or optical signal is output if the storage battery voltage drops below a predefined minimum voltage by a predefined first value, the software of the control device (1) is deactivated if the storage battery voltage drops by a predefined second value, and the hardware of the control device (1) is deactivated if the storage battery voltage drops by a predefined third value.

## Revendications

1. Appareil de commande destiné à des instruments de coupe de cheveux chauffants, comprenant des moyens pour mettre à disposition l'énergie électrique, un dispositif de commande, des moyens pour l'entrée d'au moins un paramètre de fonctionnement prédéfini, en particulier une température théorique de l'instrument de coupe de cheveux, un circuit de puissance pour mise à disposition du courant de chauffage, un dispositif interface au niveau duquel au moins un des instruments de coupe de cheveux chauffants peut être raccordé et par lequel l'énergie électrique du circuit de puissance peut être conduite pour chauffer au moins un des instruments de coupe de cheveux, ainsi que des moyens pour détecter des signaux électriques qui peuvent être associés à une température réelle d'au moins un instrument de coupe de cheveux, sachant que le dispositif de commande commande le circuit de puissance pour mise à disposition du courant de chauffage, en réaction à la température théorique prédéfinie, le moyen pour mettre à disposition l'énergie électrique et le dispositif interface (4) étant intégrés dans une pièce mobile séparée de l'instrument de coupe chauffant et à porter par l'utilisateur, **caractérisé en ce que** le circuit de puissance (3) est intégré dans la pièce mobile et que le dispositif interface (4) est conçu pour raccorder en même temps plusieurs instruments de coupe de cheveux chauffants, sachant que pour chaque instrument de coupe de cheveux, un dispositif de raccordement (5, 6), par lequel le courant du circuit de puissance (3) peut être conduit pour chauffer l'instrument de coupe de cheveux correspondant, est compris et qu'en outre, le courant de chauffage peut être commuté avec un dispositif de commutation sur un des dispositifs de raccordement (5, 6).

2. Appareil de commande selon la revendication 1, **caractérisé en ce que** le moyen pour mettre à disposition l'énergie électrique est conçu en tant qu'accumulateur et **en ce que** le dispositif de commande (7) ajuste le courant de chauffage pour l'instrument de coupe de cheveux correspondant pour régler une température théorique associée à l'instrument de coupe de cheveux, en réaction à la température réelle.

3. Appareil de commande selon la revendication 1 ou 2, **caractérisé en ce que** tout l'appareil de commande (1) est conçu en tant que pièce mobile à porter par l'utilisateur.

4. Appareil de commande selon la revendication 1 ou 2, caractérisé en une pièce stationnaire qui communique avec la pièce mobile par le biais d'une interface air, en particulier une interface radio, sachant que des données peuvent être transmises pour commander le circuit de puissance par l'intermédiaire de l'interface radio de la pièce stationnaire via la pièce mobile.

5. Appareil de commande selon la revendication 4, **caractérisé en ce que** des données concernant la température d'un instrument de coupe de cheveux peuvent être transmises par l'intermédiaire de l'interface radio de la pièce mobile via la pièce stationnaire.

6. Appareil de commande selon l'une quelconque des revendications 1 à 5, **caractérisé en ce que** des signaux, ayant trait à la température réelle, de chaque instrument de coupe de cheveux peuvent être conduits par le biais du dispositif de raccordement (5, 6) respectif.

7. Appareil de commande selon l'une quelconque des revendications 1 à 6, **caractérisé en ce qu'**un dispositif de raccordement (5, 6) comprend un connecteur unique, en particulier avec une ligne électrique individuelle, par lequel tant le courant de chauffage que les signaux relatifs à la température réelle peuvent être conduits.

8. Appareil de commande selon l'une quelconque des revendications 1 à 7, **caractérisé en ce que** la pièce mobile présente un dispositif d'attache pour fixation à une ceinture ou à une sangle.

9. Appareil de commande selon l'une quelconque des revendications 1 à 8, caractérisé en un moyen d'affichage permettant d'indiquer, pour l'instrument de coupe de cheveux concerné, une phase de chauffe et/ou que la température théorique est atteinte.

10. Appareil de commande selon l'une quelconque des revendications 1 à 9, caractérisé en des moyens pour détecter le courant de chauffage conduit par l'intermédiaire de l'interface et/ou la tension au niveau de l'interface.

11. Appareil de commande selon l'une quelconque des revendications 1 à 10, caractérisé en des moyens pour détecter la résistance de l'instrument de coupe raccordé au niveau de l'interface, sachant que le type de l'instrument de coupe raccordé peut être déterminé en fonction de la valeur de la résistance détectée.

12. Appareil de commande selon l'une quelconque des revendications 1 à 11, caractérisé en des moyens pour détecter la puissance électrique conduite par le biais de l'interface.

13. Procédé de fonctionnement d'un appareil de commande pour des instruments de coupe de cheveux chauffants, comprenant un dispositif interface, au niveau duquel plusieurs instruments de coupe de cheveux chauffants peuvent être raccordés simultanément et par lequel l'énergie électrique peut être conduite pour chauffer l'instrument de coupe de cheveux, en particulier destiné au fonctionnement d'un appareil de commande selon l'une quelconque des revendications 1 à 12, sachant que le courant conduit par le biais du dispositif interface (4) et/ou la tension est/sont détecté(es) et que plusieurs instruments de coupe de cheveux chauffants d'un circuit de puissance individuel sont alimentés en courant de chauffage et qu'à n'importe quel moment, soit un seul, soit aucun instrument de coupe de cheveux est alimenté en un courant de chauffage associé à l'instrument de coupe correspondant.

14. Procédé selon la revendication 13, **caractérisé en ce qu'**une résistance de sortie de l'interface est recherchée.

15. Procédé selon la revendication 14, **caractérisé en ce qu'**en réaction à une comparaison entre la valeur détectée de la résistance et des valeurs enregistrées de la résistance, des paramètres de fonctionnement prédéfinis et associés à un instrument de coupe donné sont ajustés.

16. Procédé selon la revendication 15, **caractérisé en ce que** la résistance du câble relié à l'interface est déterminée et **en ce que** les paramètres de fonctionnement prédéfinis sont ajustés au niveau de la résistance du câble pour prise en compte de la puissance électrique utile dans le câble.

17. Procédé selon l'une quelconque des revendications 13 à 16, **caractérisé en ce qu'**une température théorique est respectivement associée aux instruments de coupe de cheveux, **en ce que** les températures réelles des instruments de coupe de cheveux raccordés sont déterminées et qu'au cas où la température d'au moins un instrument de coupe de cheveux est inférieure, d'une valeur prédéterminée, à la température théorique, l'instrument de coupe de cheveux présentant le plus grand écart instantané de la température théorique respective est alimenté en courant de chauffage.

18. Procédé selon l'une quelconque des revendications 13 à 17, **caractérisé en ce qu'**au cas où la tension de l'accumulateur est inférieure à une tension minimale prédéfinie, et ce, d'une première valeur prédéterminée, un signal optique et/ou sonore est émis, qu'au cas où la tension de l'accumulateur est inférieure d'une deuxième valeur prédéterminée, l'appareil de commande (1) arrête le programme et qu'au cas où la tension de l'accumulateur est inférieure d'une troisième valeur prédéterminée, l'appareil de commande (1) déconnecte le matériel.
